# EUROPEAN PATENT SPECIFICATION

(11) **EP 1 953 679 B1**
(45) Date of publication and mention of the grant of the patent: **04.04.2012**
(21) Application number: 08250391.3
(22) Date of filing: 01.02.2008
(51) Int. Cl.: G06K 9/00, G06K 9/32, H04N 5/232, G06K 9/62

(54) **Imaging apparatus and photographic subject detection method thereof**
Bildgebungsgerät und fotografisches Subjekterfassungsverfahren dafür
Appareil d'imagerie et son procédé de détection d'objet photographique

(30) Priority: 05.02.2007 JP 2007025396
(43) Date of publication of application: 06.08.2008
(73) Proprietor: Ricoh Company, Ltd., Tokyo 143-8555 (JP)
(72) Inventor: Watanabe, Yoshikazu, Tokyo 143-8555 (JP)
(74) Representative: Leeming, John Gerard

(56) References cited:
- EP-A- 1 519 560
- US-A1- 2004 179 719
- US-A1- 2005 094 854

## Description

The present invention relates to an imaging apparatus equipped with an image recognition means as a detector which detects at least one target subject to be photographed from images continuously imaged by an imaging section, and to a photographic subject detection method.

There is known a digital camera as an imaging apparatus that is equipped with an image recognition means as a detector which detects at least one target photographic subject from images continuously imaged by an imaging section. For example, a digital camera is disclosed in Japanese patent publication numbers 2003-107335 and 2006-60329 as an imaging apparatus which detects a face of a person as a main photographic subject by an image recognition process from imaged images, and performs a so-called autofocus function based on a result of this detection.

In addition, to improve a spced-up of a processing speed of a detector, there is also known, for example, in Japanese patent publication number 2005-215750, a digital camera which does not use an entire imaged image area as a detection area but limits the detection area based on a focusing result, and uses a part of the entire imaged image area as the detection area.

Moreover, there is also known, for example, in Japanese patent publication number 2005-130468, a digital camera having a posture sensor, which judges if a photographic subject is imaged in a horizontal format or in a vertical format, that is, whether a camera is held horizontally or vertically when photographing. It is known that in this digital camera, for example, when the photographic subject is imaged in the vertical format in which a frequency of photographing is low relative to the horizontal format-in-which a frequency of photographing is high, a direction of a face detection process is changed and the face of the photographic subject is detected.

However, in the digital camera disclosed in Japanese patent publication number 2005-215750, there is a problem in that it is not possible to perform a face detection before photographing, because the face detection is performed in which the face detection area is limited based on a focusing area.

In addition, in the digital camera disclosed in Japanese patent publication number 2005-130468, there is also a problem in that it is not possible to detect a face contour, for example, in a following case. The digital camera disclosed in Japanese patent publication number 2005-130468 has a posture sensor, and thereby it is judged if a photographic subject is imaged in a horizontal format, i.e. a user holds a camera horizontally when photographing, or in a vertical format, i.e. a user holds a camera vertically when photographing. For example, when a person who is lying down is photographed by the digital camera in a horizontal format, the face of the person who is lying down is supposed to be recognized by scanning vertically relative to the image of the person. However, the posture sensor judges that a photographic subject, in this case the person who is lying down, is imaged in the horizontal format, therefore a face contour of the person can not be detected. In addition, the digital camera has the posture sensor, therefore it is more expensive to manufacture.

Moreover, in Japanese patent publication numbers 2003-107335 and 2006-60329, the problems such as described above and a solution to the problems are not mentioned. EP 1519 560 A2 discloses a face detection apparatus that filters the image dependent on the attitude of the sensing apparatus.

An object of the invention is to provide an imaging apparatus and a photographic subject detection method, which can prevent a detection error from occurring as much as possible in a photographic subject detection process and also before photographing, and which can improve an average performance rate of a detection mode corresponding to a scene assuming that a frequency of photographing is relatively high without a significant rise in cost.

According to the present invention, there is provided imaging apparatus as specified in the claim 1.

Preferably, the detection mode includes at least two processing patterns in which the detection processing speed is different and which are classified corresponding to a direction of the at least one target photographic subject.

Preferably, the detection mode includes at least two processing patterns in which the detection processing speed is different and which are classified corresponding to a size of the at least one target photographic subject.

Preferably, the detection mode includes at least two processing patterns in which the detection processing speed is different and which are classified corresponding to a detection area where the at least one target photographic subject is detected.

Preferably, the detection mode includes at least two processing patterns in which the detection processing speed is different and which are classified corresponding to the direction of the at least one target photographic subject, the at least two processing patterns in which the detection processing speed is different and which are classified corresponding to the size of the at least one target photographic subject and the at least two processing patterns in which the detection processing speed is different and which are classified corresponding to the detection area where the at least one target photographic subject is detected, and wherein the first detection mode includes processing patterns in which each of the detection processing speed is fast and which are classified corresponding to the direction of the at least one target photographic subject, corresponding to the size of the at least one target photographic subject in an image area and corresponding to the detection area where the at least one target photographic subject is detected, and wherein the second detection mode includes processing patterns in which each of the detection processing speed is slow and which are classified corresponding to the direction of the at least one target photographic subject, corresponding to the size of the at least one target photographic subject in an image area and corresponding to the detection area where the at least one target photographic subject is detected.

Preferably, the at least two processing patterns in which the detection processing speed is different and which are classified corresponding to the direction of the at least one target photographic subject, include a fast processing pattern in which a detection process is performed in a horizontal direction relative to a photographic subject as an object, and a slow processing pattern in which the detection process is performed in horizontal and vertical directions relative to the photographic subject as the object.

Preferably, the at least two processing patterns in which the detection processing speed is different and which are classified corresponding to the size of the at least one target photographic subject, include a fast processing pattern in which a detection process is performed on a large photographic subject in an image area as an object, and a slow processing pattern in which the detection process is performed on large and small photographic subjects in the image area as the objects.

Preferably, the at least two processing patterns in which the detection processing speed is different and which are classified corresponding to the detection area where the at least one target photographic subject is detected, include a fast processing pattern in which a detection process is performed on a small detection area of a central part in regard to an entire image area as an object, and a slow processing pattern in which the detection process is performed on a larger detection area than the small detection area as the object.

Preferably, the controller repeatedly performs the detection mode when the at least one target photographic subject is detected by performing the detection mode.

Preferably, the at least one target photographic subject includes a face of a person.

According to the present invention, there is provided a photographic subject detection method as specified in claim 11.

Preferably, the photographic subject detection method further comprises: repeating the same detection process of the first detection process to the third detection process when the at least one target photographic subject is detected by that one of the first detection process to the third detection process.

Preferably, the target photographic subject includes a face of a person.

Preferably, the at least one of the first to the third detection modes includes at least two processing patterns in which the detection processing speed is different and which are classified corresponding to a direction of the at least one target photographic subject.

Preferably, the at least one of the first to the third detection modes includes at least two processing patterns in which the detection processing speed is different and which are classified corresponding to a size of the at least one target photographic subject.

Preferably, the at least one of the first to the third detection modes includes at least two processing patterns in which the detection processing speed is different and which are classified corresponding to a detection area where the at least one target photographic subject is detected.

Preferably, the at least two processing patterns in which the detection processing speed is different and which are classified corresponding to the direction of the at least one target photographic subject, include a fast processing pattern in which a detection process is performed in a horizontal direction relative to a photographic subject as an object, and a slow processing pattern in which the detection process is performed in horizontal and vertical directions relative to the photographic subject as the object.

Preferably, the at least two processing patterns in which the detection processing speed is different and which are classified corresponding to the size of the at least one target photographic subject, include a fast processing pattern in which a detection process is performed on a large photographic subject in an image area as an object, and a slow processing pattern in which the detection process is performed on large and small photographic subjects in the image area as the objects.

Preferably, the at least two processing patterns in which the detection processing speed is different and which are classified corresponding to the detection area where the at least one target photographic subject is detected, include a fast processing pattern in which a detection process is performed on a small detection area of a central part in regard to an entire image area as an object, and a slow processing pattern in which the detection process is performed on a larger detection area than the small detection area as the object.

The invention will now be described by way of non-limiting example, with reference to the accompanying drawings, in which:
FIG 1A is a top view illustrating an external appearance of a digital camera as an imaging apparatus according to an embodiment of the present invention.
FIG. 1B is a front view illustrating the external appearance of the digital camera as the imaging apparatus according to the embodiment of the present invention.
FIG. 1C is a rear view illustrating the external appearance of the digital camera as the imaging apparatus according to the embodiment of the present invention.
FIG. 2 is a block diagram which illustrates a system configuration inside the digital camera illustrated in FIGS. 1A to 1C.
FIG. 3A explains a processing pattern being set corresponding to a detection mode which detects a target photographic subject, and illustrates one of at least two different detection processing speed processing patterns which are classified corresponding to a direction of the target photographic subject in an entire image area.
FIG 3B explains a processing pattern being set corresponding to the detection mode which detects the target photographic subject, and illustrates another one of at least two different detection processing speed processing patterns which are classified corresponding to the direction of the target photographic subject in the entire image area.
FIG. 3C explains a processing pattern being set corresponding to the detection mode which detects the target photographic subject, and illustrates one of at least two different detection processing speed processing patterns which are classified corresponding to a proportion (size) of the target photographic subject in the entire image area.
FIG. 3D explains a processing pattern being set corresponding to the detection mode which detects the target photographic subject, and illustrates another one of at least two different detection processing speed processing patterns which are classified corresponding to the proportion (size) of the target photographic subject in the entire image area.
FIG. 3E explains a processing pattern being set corresponding to the detection mode which detects the target photographic subject, and illustrates one of at least two different detection processing speed processing patterns which are classified corresponding to a range of detection area in which the target photographic subject is detected.
FIG. 3F explains a processing pattern being set corresponding to the detection mode which detects the target photographic subject, and illustrates another one of at least two different detection processing speed processing patterns which are classified corresponding to the range of detection area in which the target photographic subject is detected.
FIG. 4 is a flowchart which explains a setting of the detection mode according to the embodiment of the present invention.
FIG 5 explains an image data capture in the detection process illustrated in FIG. 4.
FIG. 6 explains a detection process, which is a combination of processing patterns of FIGS. 3A, 3C and 3E among processing patterns illustrated in FIGS. 3A to 3F.
FIG. 7 explains a detection process, which is a combination of processing patterns of FIGS. 3B, 3C and 3E among processing patterns illustrated in FIGS. 3A to 3F.
FIG. 8 explains a detection process, which is a combination of processing patterns of FIGS. 3B, 3D and 3F among processing patterns illustrated in FIGS. 3A to 3F.
FIG. 9 is a flowchart which explains an embodiment when a tracking process is performed based on a result of a face image detection process.
FIG. 10 explains an image data capture in the tracking process illustrated in FIG. 9.

Hereinafter, with reference to drawings, an embodiment according to the present invention will be explained.

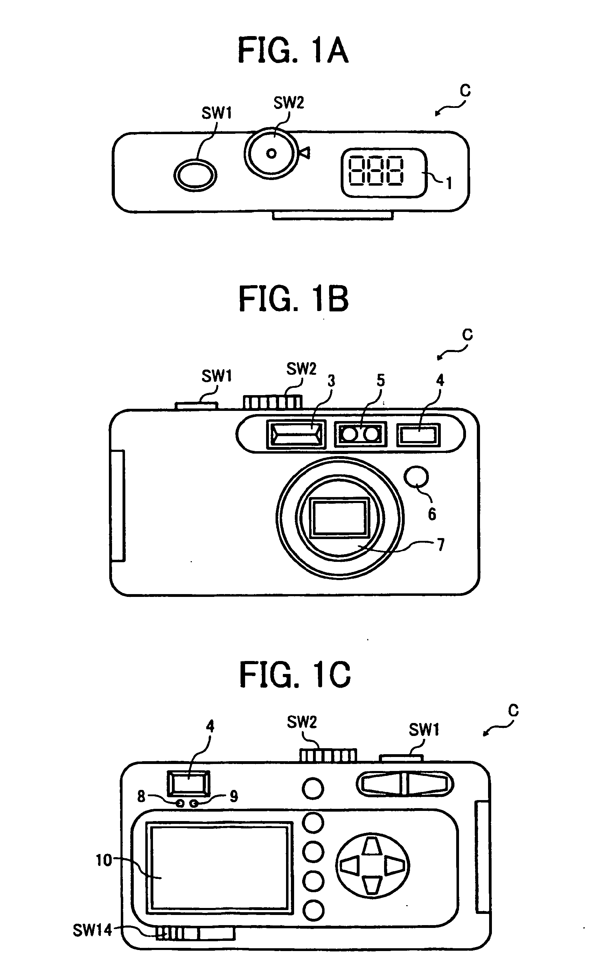

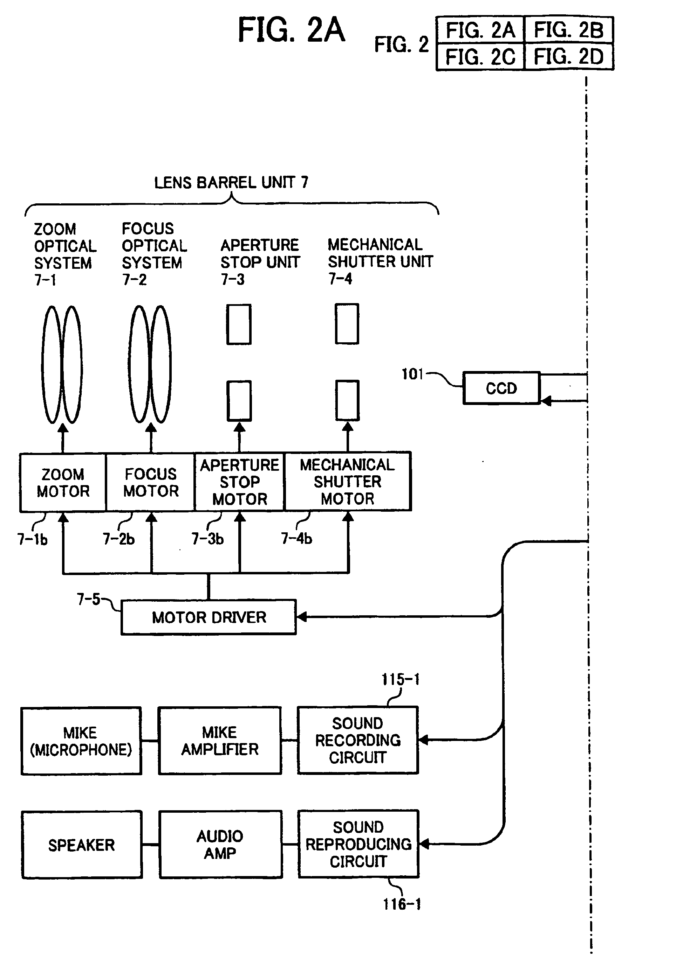

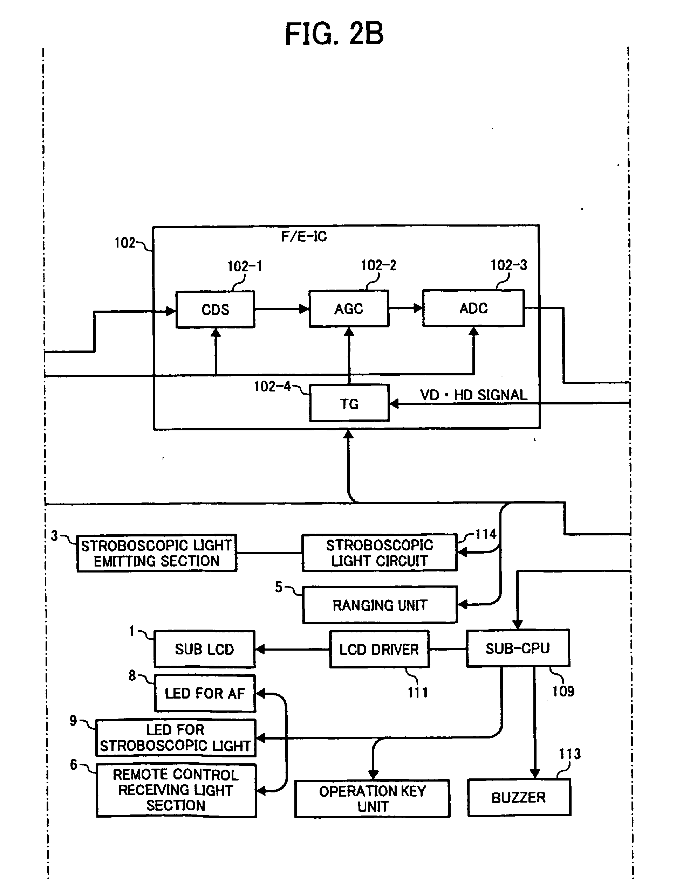

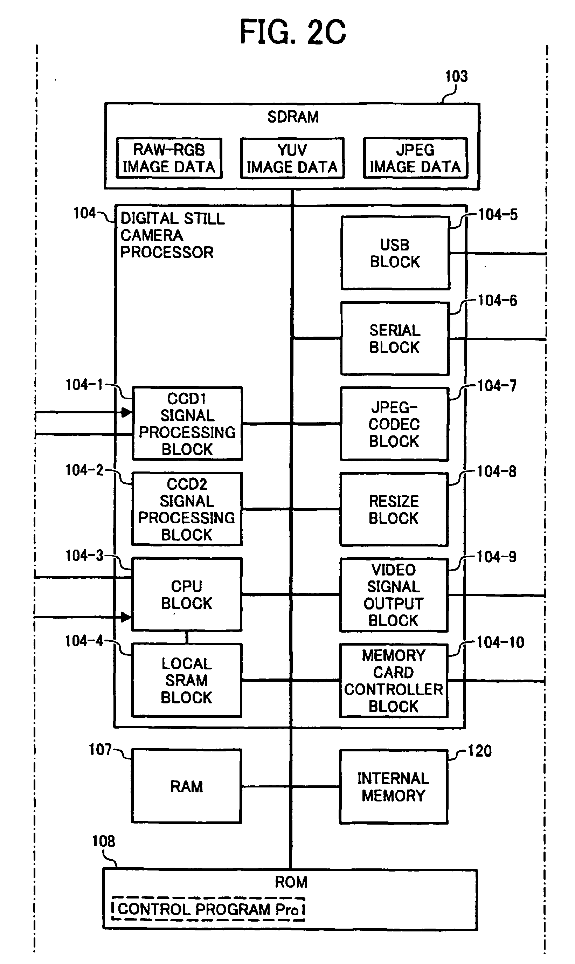

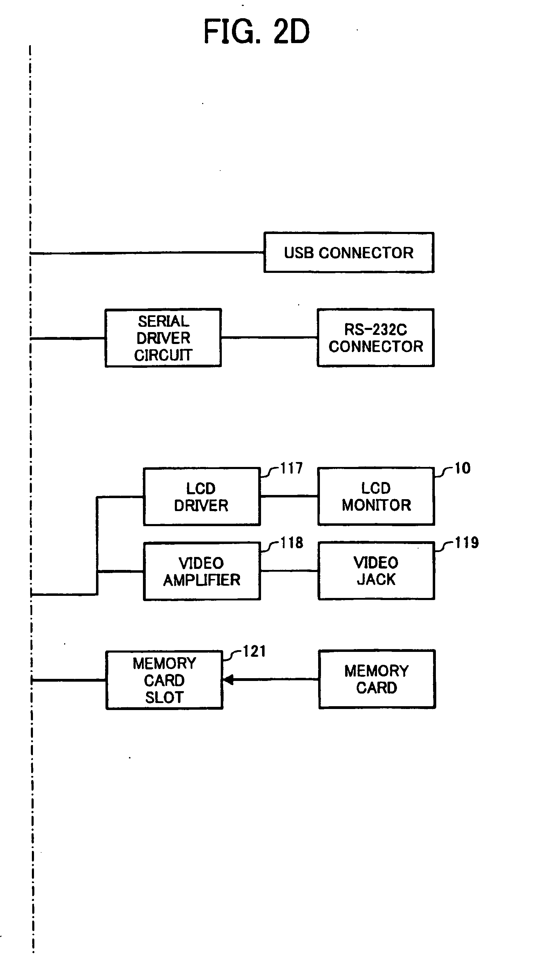

FIGS. 1A to 1C, are external views of a digital camera as an imaging apparatus according to the embodiment of the present invention. FICx 1A is a top view thereof, FIG. 1B is a front view thereof and FIG. 1C is a rear view thereof. FIG 2 is a block diagram which illustrates a system configuration inside the digital camera.

In FIGS. 1A to 1C, a symbol C denotes the digital camera as the imaging apparatus. On a top surface of the digital camera C, a sub-liquid crystal display 1, a release switch SW1 and a mode dial SW2 are provided.

In a front side of the digital camera C, a stroboscopic light emitting section 3, an optical finder 4, a ranging unit 5, a remote control receiving light section 6 and a lens barrel unit 7 are provided. The lens barrel unit 7 is equipped with photographing lenses. In a rear side of the digital camera C, the optical finder 4, an LED (Light-Emitting Diode) for AF 8, an LED for stroboscopic light 9, an LCD (Liquid Crystal Display) monitor 10 and so on are provided.

In FIG. 2, a numeral 104 denotes a digital still camera processor. (Hereinafter, simply called a processor.) The processor 104 has a built-in CPU (Central processing Unit). Each part of the digital camera C is controlled by the processor 104.

The processor 104 is equipped with a CCD (Charge-Coupled Device) 1 signal processing block 104-1, a CCD 2 signal processing block 104-2, a CPU block 104-3, a local SRAM (Static Random Access Memory) block 104-4, a USB block 104-5, a serial block 104-6, a JPEG codec block 104-7, a resize block 104-8, a video signal output block 104-9 and a memory card controller block 104-10. Each of these blocks 104-1 to 104-10 is mutually connected via a bus line.

In the outside of the processor 104, an SDRAM (Synchronous Dynamic Random Access Memory) 103, a RAM (Random Access Memory) 107, a ROM (Read Only Memory) 108 and an internal memory 120 are provided. The ROM 108 stores a control program Pro, a parameter and so on. The internal memory 120 memorizes image data of photographed images. And these are also connected to the processor 104 via the bus line.

In the SDRAM 103, RAW-RGB image data (image data on which a white balance correction and a γ correction are performed.), YUV image data (image data converted into brightness data and color difference data) and JPEG image data (image data compressed in a JPEG format) are saved.

When a power switch SW14 is on, the control program Pro stored in the ROM 108 is loaded into a memory of the processor 104, and then is run. Each part of the digital camera C is controlled by this control program Pro.

All the processes described later are performed by mainly the processor 104 by performing this control program Pro.

The lens barrel unit 7 includes a zoom optical system 7-1, a focus optical system 7-2, an aperture stop unit 7-3 and a mechanical shutter unit 7-4.

The zoom optical system 7-1, the focus optical system 7-2, the aperture stop unit 7-3 and the mechanical shutter unit 7-4 are respectively driven by a zoom motor 7-1b, a focus motor 7-2b, an aperture stop motor 7-3b and a mechanical shutter motor 7-4b.

In addition, each of these motors 7-1b to 7-4b is driven by a motor driver 7-5. The motor driver 7-5 is controlled by the CPU block 104-3 of the processor 104,

A photographic subject image formed in a receiving light section of the CCD 101 by each of the zoom optical system 7-1 and the focus optical system 7-2, is converted into an image signal by the CCD 101, and this image signal is outputted to an F/E-IC (Front-End Integrated Circuit) 102.

The F/E-IC 102 is composed of a CDS (Correlated Double Sampling) 102-1, an AGC (Automatic Gain Control) 102-2, an ADC (Analog Digital Convertor) 102-3 and a TG (Timing Generator) 102-4. The ADC 102-3 converts an analog image signal into a digital image signal.

After the F/E-IC 102 has performed predetermined processes such as a noise reduction process, a gain adjustment process and so on, the FB-IC 102 converts the analog image signal into the digital image signal, and then outputs to the CCD 1 signal processing block 104-1.

The lens barrel unit 7, the CCD 1 O1 and the F/E-IC 102 have a function as an imaging section which continuously images a photographic subject. The CCD 1 signal processing block 104-1 works as an image data processing section which processes image data.

In addition, a timing of sampling the image signal is that a VD·HD (Vertical Synchronization-Horizontal Synchronization) signal from the CCD 1 signal processing block 104-1 is fed back to the TG 102-4 and thereby is performed.

The CPU block 104-3 of the processor 104 is connected to a sound recording circuit 115-1, a sound reproducing circuit 116-1, a stroboscopic light circuit 114, a ranging unit 5 and a sub-CPU 109. The stroboscopic light circuit 114 emits light from the stroboscopic light emitting section 3. The ranging unit 5 measures a distance between a photographic subject. These circuits described above are controlled by the CPU block 104-3.

The sub-LCD 1 via the LCD driver 111, the remote control receiving light section 6, the LED for AF 8, the LED for stroboscopic light 9, an operation key unit and a buzzer 113 arc connected to and controlled by the sub-CPU 109. The operation key unit includes each switch SW1, SW14 and so on. In addition, the sub CPU 109 observes an input state of a signal to the remote control receiving light section 6 and an input state to the operation key unit.

An LCD driver 117 and a video amplifier 118 are connected to the video signal output block 104-9 of the processor 104. The LCD driver 117 drives the LCD monitor 10. The video amplifier 118 amplifies a video signal and performs an impedance matching. The LCD monitor 10 is connected to the LCD driver 117. A video jack 119 which is for connecting to external monitor devices such as TV and so on is connected to the video amplifier 118.

The video signal output block 104-9 converts image data into a video signal and outputs to the external monitor devices connected to the LCD monitor 10 or the video jack 119.

The LCD monitor 10 is used for monitoring a photographic subject while photographing, for displaying a photographed image and for displaying a recorded image in a memory card or an internal memory 120.

In this digital camera, when the power switch SW14 is on, a key of the operation key unit is operated and a detecting menu which detects a face of a target photographic subject from a menu displayed on the LCD monitor 10 is chosen, and the CPU block 104-3 enters a mode which performs a detection process.

When the CCD 1 signal processing block 104-1 enters a mode which performs a detection process, a function as a detector, which detects at least one target photographic subject from images continuously imaged by the imaging section, is performed. Here, plural detection modes are prepared as a detection mode which detects the photographic subject.

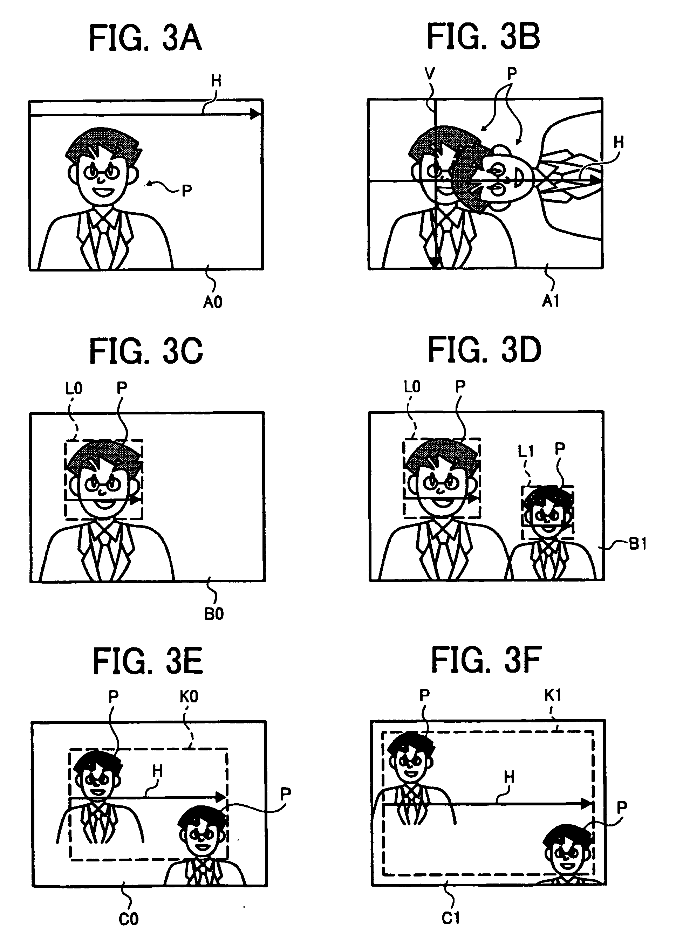

FIGS. 3A to 3F are explanatory drawings for explaining various kinds of processing patterns being set corresponding to the detection mode which detects a target photographic subject. FIGS. 3A and 3B illustrate at least two different detection processing speed processing patterns, A0 and A1, which are classified corresponding to a direction of the target photographic subject in an entire image area. FIGS. 3C and 3D illustrate at least two different detection processing speed processing patterns, B0 and B1, which are classified corresponding to a proportion (size) of the target photographic subject in the entire image area. FIGS. 3E and 3F illustrate at least two different detection processing speed processing patterns, C0 and C1, which are classified corresponding to a range of a detection area where the target photographic subject is detected. In each of these drawings, a face image P of a person as a photographic subject (Hereinafter, simply called a face.) on an image plane is illustrated.

In FIG. 3A, a state in which a photographic subject is scanned in a horizontal direction H relative to the image plane so that a detector can detect a face P of a target photographic subject is illustrated. In FIG. 3B, a state in which the subjects are scanned in the horizontal direction H and in a vertical direction V to the image plane so that the detector can detect the faces P of the target photographic subjects is illustrated.

In the processing pattern A1 illustrated in FIG. 3B, twofold scanning compared with the processing pattern A0 illustrated in FIG. 3A is performed, therefore the processing pattern A1 illustrated in FIG. 3B is a relatively slow processing pattern compared with the processing pattern A0 illustrated in FIG. 3A, when the processing pattern A0 is regarded as a fast processing pattern. In addition, camera users usually photograph in a horizontal format (i.e. holding a camera horizontally when photographing.), therefore FIG. 3A corresponds to a scene assuming that a frequency of photographing is relatively high. On the other hand, FIG. 3B corresponds to a scene assuming that a frequency of photographing is relatively low.

In FIG. 3C, a state in which a large face P of the photographic subject in a frame L0 is scanned so that the detector can detect the face P of the target photographic subject is illustrated. In FIG. 3D, a state in which a large face P of the photographic subject in the frame L0 and a small face P of the photographic subject in the frame L1 are scanned so that the detector can detect faces P of the target photographic subjects is illustrated. In a processing pattern B1 illustrated in FIG. 3D, twofold scanning compared with a processing pattern B0 illustrated in FIG. 3C is performed, therefore the processing pattern B1 illustrated in FIG. 3D is a relatively slow processing pattern compared with the processing pattern B0 illustrated in FIG. 3C, when the processing pattern B0 is regarded as a fast processing pattern.

In addition, when photographing a person as a photographic subject, there are many opportunities for a proportion of a face P of a target photographic subject in an entire image area to be large. Therefore, FIG. 3C corresponds to a scene assuming that the frequency of photographing is relatively high. On the other hand, FIG. 3D corresponds to a scene assuming that the frequency of photographing is relatively low.

In FIG. 3E, a state in which a small detection area K0 of a central part relative to the entire image area is scanned so that the detector can detect the face P of the target photographic subject is illustrated. In FIG. 3F, a larger detection area K1 than the small detection area K0 of the central part in regard to the entire image area is scanned so that the detector can detect the face P of the target photographic subj ect.

The processing pattern C1 illustrated in FIG. 3F scans a larger area than the detection area illustrated in FIG. 3E. Therefore, the processing pattern C1 illustrated in FIG. 3F is a relatively slow processing pattern compared with the processing pattern C0 illustrated in FIG. 3E, when the processing pattern C0 is regarded as a fast processing pattern.

In addition, when photographing a person as a photographic subject, there usually are many opportunities for a face P of a target photographic subject to be in a center of an image plane and there usually are few opportunities for the face P of the target photographic subject to be in a peripheral part of the image plane. Therefore, FIG. 3E corresponds to a scene assumed that the frequency of photographing is relatively high. On the other hand, FIG. 3F corresponds to a scene assuming that the frequency of photographing is relatively low.

Each processing pattern of these is memorized and stored, for example, in the ROM 108.

The processer 104 has a role of setting a detection mode by choosing processing patterns and making a combination of three types of processing patterns. These are the three types of processing patterns. A0 and A1 are the processing patterns which perform detections corresponding to a direction of the face P. B0 and B1 are the processing patterns which perform detections corresponding to a size of the face P. C0 and C1 are the processing patterns which perform detections corresponding to a detection area. The processor 104 respectively chooses either A0 or A1, either B0 or B1 and either C0 or C1, and then those three processing patterns are combined. And the detection mode is set by the processor 104.

The number of the detection modes by combinations of those three processing patterns is 8 in total, however, here, the number of the detection modes set by a setting means is 6. The detection modes m are variables having integers 0, 1, 2, 3, 4 and 5. Each detection mode m is described in a Table 1 below.

**[Table 1]**

| DETECTION MODE (m) | 0 | 1 | 2 | 3 | 4 | 5 |
|---|---|---|---|---|---|---|
| DIRECTION(S) OF FACE(S) | VERTICAL | VERTICAL AND HORIZONTAL | VERTICAL | VERTICAL AND HORIZONTAL | VERTICAL | VERTICAL AND HORIZONTAL |
| SIZE(S) OF FACE(S) | LARGE | LARGE | LARGE AND SMALL | LARGE | LARGE | LARGE AND SMALL |
| SIZE OF DETECTION AREA | SMALL | SMALL | SMALL | LARGE | LARGE | LARGE |

The detection mode m=0 is a mode to detect an image of the face, in which the direction of the face is vertical, the size of the face is large and the detection area is small as an object. The combination of these processing patterns (A0, B0, C0) corresponds to a scene assuming that a frequency of photographing is relatively the highest, and corresponds to a mode that the frequency of photographing is high in which a detection processing speed for detecting a target photographic subject is relatively the fastest.

This is because there are many opportunities for a face of a photographic subject to be in close-up and to be in a center of an image plane as a composition of a photograph when usual photographing is performed in a horizontal format. Therefore, this combination is the most commonly used type of the processing pattern combination. Moreover, this combination is a combination of the processing patterns in which each the detection processing speed is relatively fast.

The detection mode m=1 is a mode to detect an image of the face, in which the directions of the faces are vertical and horizontal, the sizes of the faces are large and the detection area is small as an object. The combination of these processing patterns (A1, B0, C0), corresponds to a scene assuming that the frequency of photographing is relatively high next to the detection mode m=0, and corresponds to a middle mode in which a detection processing speed for detecting a target photographic subject is relatively fast.

This is because it is assumed that there are fairly many opportunities for camera users to photograph in a vertical format by holding a camera vertically.

The detection mode m=2 is a mode to detect an image of the face, in which the direction of the face is vertical, the sizes of the faces are large and small and the detection area is small as an object. The combination of these processing patterns (A0, B1, C0) corresponds to a scene assuming that the frequency of photographing is relatively high next to the detection mode m=1, and corresponds to a middle mode in which a detection processing speed for detecting a target photographic subject is relatively fast.

This is because there also are fairly many opportunities for a proportion of each face P to be small in an entire image plane, for example, when photographing many people such as a group photograph and so on.

The detection mode m=3 is a mode to detect an image of the face, in which the directions of the faces are vertical and horizontal, the size of the face is large and the detection area is large as an object. The combination of these processing patterns (A1, B0, C1) corresponds to a scene assuming that the frequency of photographing is relatively high next to the detection mode m=2, and corresponds to a middle mode in which a detection processing speed for detecting a target photographic subject is relatively fast.

This is because it is considered that there are not so many opportunities for camera users to photograph a face P of a photographic subject at an edge of an image plane when photographing in a horizontal format. However, it is also assumed that there are some opportunities for camera users to photograph the face P of the photographic subject at the edge of the image plane when photographing in a vertical format.

The detection mode m=4 is a mode to detect an image of the face, in which the direction of the face is vertical, the size of the face is large and the detection area is large as an object. The combination of these processing patterns (A0, B0, C1) corresponds to a middle mode assuming that the frequency of photographing is low next to a mode corresponding to a low frequency of photographing mode in which a detection processing speed for detecting a target photographic subject is relatively the slowest described later.

This is because it is considered that there are not so many opportunities for camera users to photograph a face P of a target photographic subject which is large at an edge of an image plane when photographing in a horizontal format.

The detection mode m=5 is a mode to detect an image of the face, in which the directions of the faces are vertical and horizontal, the sizes of the faces are large and small and the detection area is large as an object. The combination of these processing patterns (A1, B1, C1) corresponds to a scene assuming that the frequency of photographing is relatively low, and corresponds to a low frequency of photographing mode in which a detection processing speed for detecting a target photographic subject is relatively the slowest.

This is because it is considered that there are almost few opportunities for camera users to photograph a face P of a target subject which is small at an edge of an image plane when photographing in a vertical format. In addition, this combination is a combination of the processing patterns in which each the detection processing speed is slow, therefore it is a mode in which the detection processing speed is the slowest.

The processor 104 sets these detection modes described above for the CCD 1 signal processing block 104-1, and the processor 104 also has a function as a controller which controls the CCD 1 signal processing block 104-1 such that each of these detection modes described above is sequentially set for the CCD 1 signal processing block 104-1.

Here, the processor 104 controls the CCD 1 signal processing block 104-1 such that each detection mode is performed sequentially from a mode in which a frequency of photographing is high toward a mode in which the frequency of photographing is low through a middle mode.

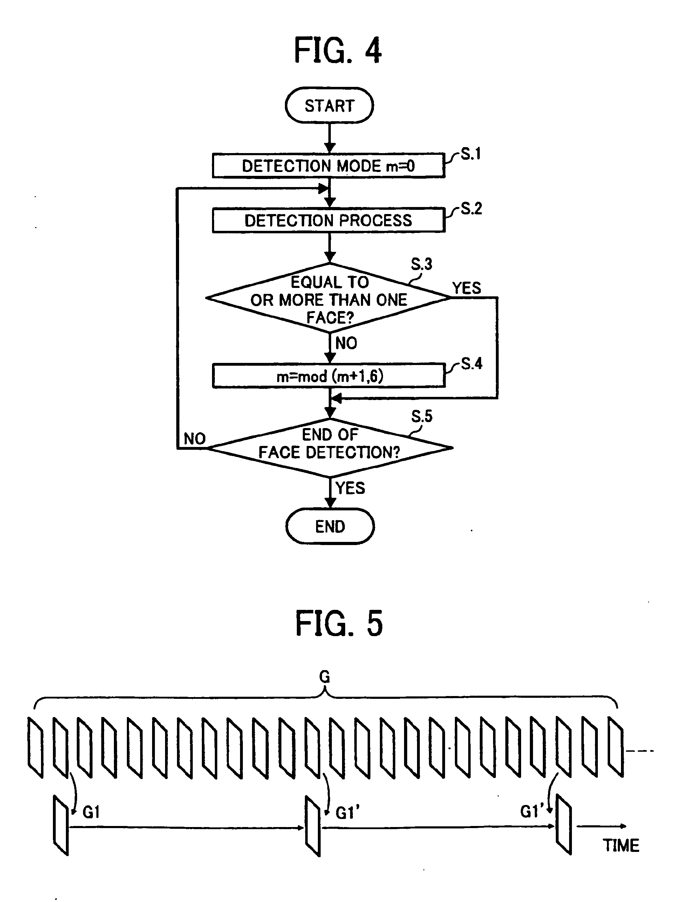

A digital camera, when a face detection mode is set, performs a process flow illustrated in FIG. 4. This face detection process is performed alongside a focusing process, an exposure adjustment process and a monitoring image displaying process.

When starting the face detection process, the processor 1 04 sets a detection mode m=0 (Step S.1). When the detection mode m=0 is set, a combination of processing patterns (A0, B0, C0) is set for the CCD 1 signal processing block 104-1. The CCD 1 signal processing block 104-1, as illustrated in FIG. 5, captures image data G1 at a predetermined timing from image data G continuously obtained as image data while monitoring (image data while photographing standby), and performs a detection process based on the combination of the processing patterns (A0, B0, C0).

The CCD 1 signal processing block 104-1, as illustrated in XFIG. 6, performs the detection process in a horizontal direction in a small area K0, and performs the detection process for a face P in which a size is equivalent to a frame L0. This face recognition process technology is known and disclosed in such as Japanese patent publication number 2003-107335 and so on, therefore it is not explained in detail.

The processor 104 judges whether at least one face P is detected by the CCD 1 signal processing block 104-1 in the detection area K0 or not (Step S.3). When at least one face P is detected, the face detection process is shifted to Step S.5 and the face detection is judged to be ended or not. When the face detection process is ended, the process flow is ended. When the face detection process continues, the face detection process is shifted to Step S.2. In the Step S.2, as illustrated in FIG. 5, new data G1' are captured and the face detection process is performed, and a loop of the Steps S.2, S.3 and S.5 is repeated.

For example, when a direction of a face P is vertical and the face P remains being in a small area K0 of a central part, the detection mode m=0 including a combination of process patterns (A0, B0, C0) is performed repeatedly.

In the Step S.3, when at least one face is not detected by the CCD 1 signal processing block 104-1, the processor 104 sets the detection mode for the detection mode m=1 (Step S.4). When the detection mode m=1 is set, the processor 104 sets the CCD 1 signal processing block 104-1 for a combination of processing patterns (A1, B0, C0). After the processor 104 sets the detection mode m=1, the face detection process is shifted to the Step S.5. In the Step S.5, when the face detection process continues, the face detection process is shifted to the Step S.2 by the processor 104, and the processor 104 makes the CCD 1 signal processing block 104-1 perform the detection process having a combination of processing patterns (A1, B0, C0).

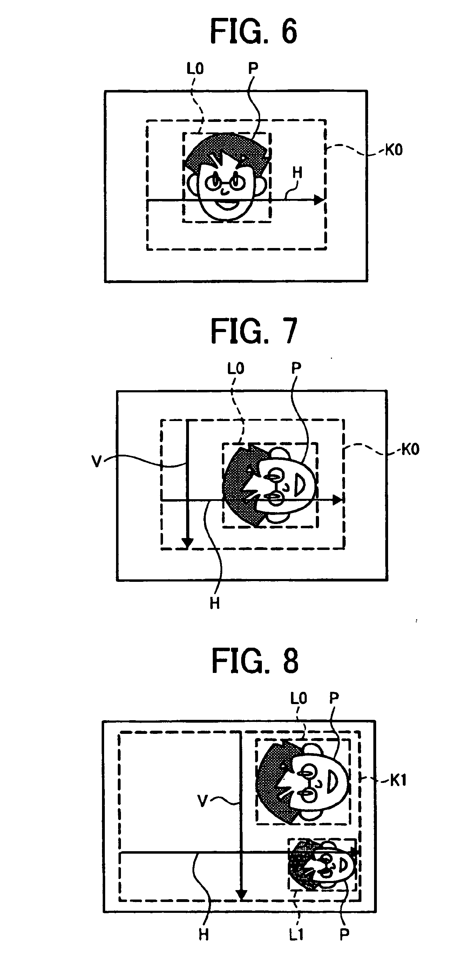

The CCD 1 signal processing block 104-1, as illustrated in FIG 7, performs the detection process in a horizontal direction and in a vertical direction in a small area K0, and performs the detection process for a face P in which a size is equivalent to a frame L0.

For example, when a direction of a face P is horizontal and the face P is in a small area K0 of a central part, the face P is detected by this detection mode m=1.

The processor 104 performs the detection modes m from m=0 to m=4. When a face P is not detected by each of these modes, a detection process, a detection mode m=5 including a combination of processing patterns (A1, B1, C1) is performed.

In this detection mode m=5, as illustrated in FIG. 8, scanning is performed in a vertical direction and in a horizontal direction in a large area K1, and the detection processes for faces P in which sizes are a frame L0 and a frame L1 are performed.

For example, when a direction of a face P is horizontal and the face P is small at an edge of an image plane, the face P is detected by this detection mode m=5.

When a face P is not detected also by this detection process of the detection mode m=5, the processor 104, in the Step S.4, sets the detection mode m to 6 and newly sets a remainder divided by 6 for the detection mode m. That is, in the Step S.4, the detection mode m=0 is set, again, the detection processes of the detection modes m=0 to m=5 are repeated, and this process repeatedly continues until the end of the face detection process.

A coordinate value of a face image detected by the processes described above, for example, is successively memorized in the RAM 107, is updated, and is referred to in processes of a focusing control, an exposure adjustment and a monitoring image displaying.

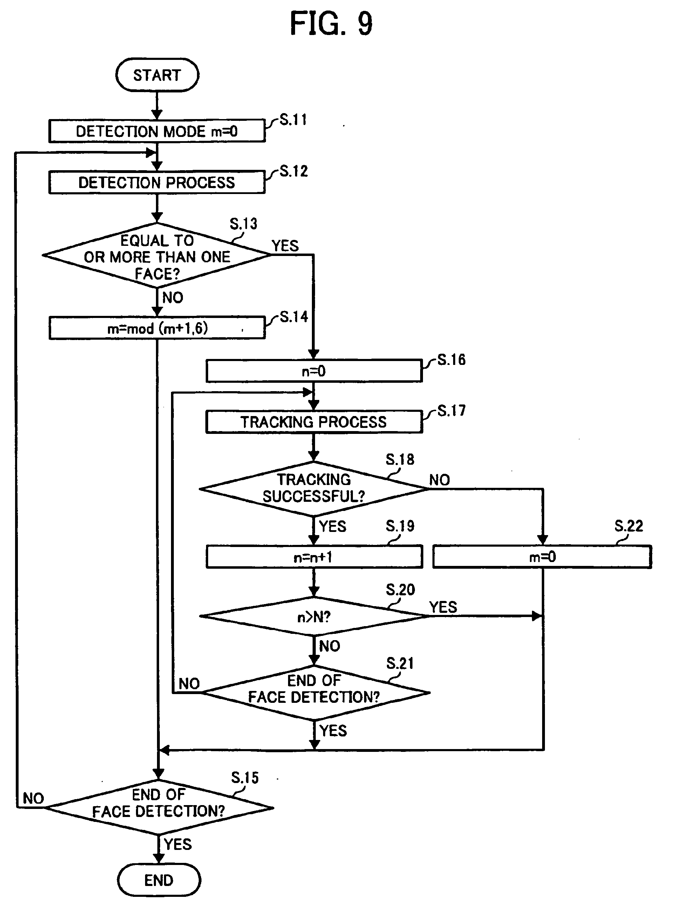

FIG. 9 is a flowchart for explaining an embodiment when performing a tracking process based on a result of a face image detection process.

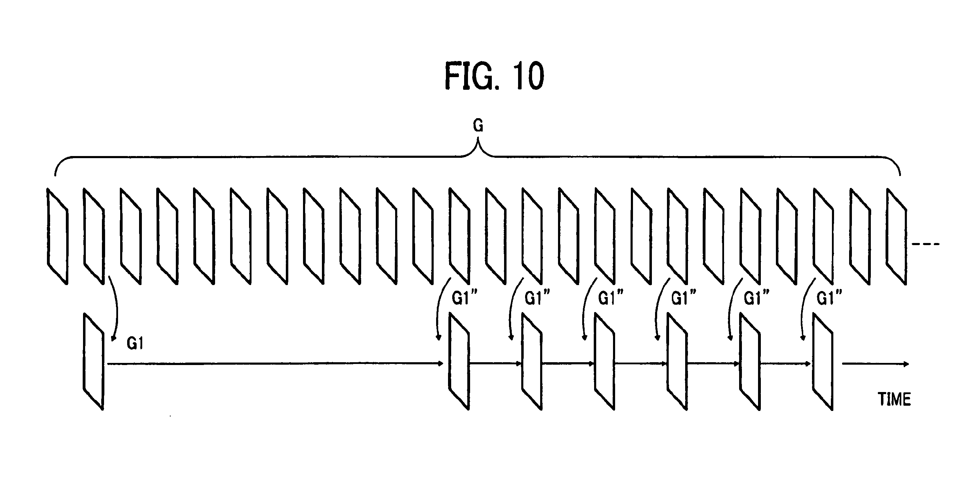

When starting the face detection, the processor 104 sets the detection mode m=0 for the CCD 1 signal processing block 104-1 (Step S.11). When the detection mode m=0 is set, a combination of processing patterns (A0, B0, C0) is set for the CCD 1 signal processing block 104-1. The CCD 1 signal processing block 104-1 captures image data G1 at a predetermined timing from image data G while monitoring, which is illustrated in FIG. 10, and performs the detection process based on the combination of the processing patterns (A0, B0, C0) (Step S.12).

The processor 104 judges whether at least one face P is detected in a detection area K0 or not (Step S.13). When at least one face P is not detected, the face detection process is shifted to Step 5.14, the detection mode m is set to a next detection mode and the face detection is judged to be ended or not (Step S.15). Contents of controlling processes from the Steps S.11 to S.15 are the same as the contents of the processes from the Steps S.1 to S.5 explained before, therefore they are not explained in detail.

In the Step S.13, when at least one face is detected, the face detection process is shifted to a tracking process mode after Step S.16 by the processor 104.

In the Step S.16, the processor 104 sets a tracking counter n to n=0 and performs a tracking process (Step S.17). Next, the processor 104 judges whether the tracking is successful or not (Step S.18). When the tracking is successful, the tracking counter is incremented by one by the processor 104 (Step S.19), and the processor 104 judges whether the number of times of the tracking is over a predetermined number of times N or not (Step S.20).

Here, the number of times of the tracking is defined as a limit value, which clears an accumulation of a tracking error. Because while the tracking is repeated many times, tracking not a target photographic subject but a different photographic subject may be occurring. In addition, the different photographic subject from the target photographic subject may be captured as image data and this different photographic subject may be also a new target photographic subject.

When a counter value of the tracking counter n is less than or equal to the predetermined number of times N, the face detection process is shifted to Step S.21 and the processor 104 judges whether the face detection is ended or not. And when the face detection is not ended, the face detection process is shifted to the Step S.17 and the tracking process is repeated. When the face detection is ended, the face detection process is shifted to the Step. S 15, and the processor 104 judges again whether the face detection is ended or not and makes the face detection process end.

In the Step S.20, when the tracking counter n is over the predetermined number of times N, the face detection process is shifted to the Step S.15 and the processor 104 judges whether the face detection is ended or not. And when the face detection is not ended, the face detection process is shifted to the Step S.12 and the processor 104 performs the face detection process. When making the face detection mode end, the face detection process is shifted to END and the processor 104 makes the face detection end.

In the Step S.18, when the tracking is ended unsuccessfully, the face detection process is shifted to Step S.22, and the processor 104 sets the detection mode to m=0 and then the face detection process is shifted to the Step S.15. In the Step S.15, when the face detection is not ended, the face detection process is shifted to the Step S.12 and again the detection process is sequentially performed from the detection mode m=0 toward m=5.

That is, in this tracking process mode, as illustrated in FIG. 10, image data G1 are captured and a face image detection is performed. When the face image is detected, image data G1" are captured from the image data G at a predetermined timing. The captured image data G1" are judged as to whether there is a face image as a tracking object or not. When the number of times of the tracking n is over the predetermined number of times N, new image data G1 are captured and the face image detection process is repeatedly performed.

According to this tracking process performing mode, the face image detection process is skipped while tracking, therefore a speed-up of the face image detection can be achieved.

An imaging apparatus according to the embodiment of the present invention is configured to classify detection modes in three types to shift detection modes stepwise and to detect a target photographic subject. The three types of the detection modes are a first mode which corresponds to a scene assuming that a frequency of photographing is relatively high and a detection processing speed detecting a target photographic subject is relatively the fastest, a second mode which corresponds to a scene assuming that the frequency of photographing is relatively low and the detection processing speed detecting the target photographic subject is relatively the slowest and a third mode (middle mode) is between the both modes described above. Therefore, an imaging apparatus according to an embodiment of the present invention can be obtained without a significant rise in cost, can prevent a detection error from occurring as much as possible in a photographic subject detection process and also before photographing, and can improve an average performance rate of a detection mode corresponding to a scene assuming that the frequency of photographing is relatively high.

Although the present invention has been described in terms of exemplary embodiments, it is not limited thereto. It should be appreciated that variations may be made un the embodiments described by persons skilled in the art without departing from the scope of the present invention as defined by the following claims.

## Claims

1. An imaging apparatus, comprising:
an imaging section (7, 101 and 102);
a detector (104-1) which detects at least one target subject to be photographed from images continuously imaged by the imaging section (7, 101 and 102); and
a controller (104) which sets to the detector a detection mode including a first detection mode, a second detection mode and a third detection mode,
**characterised in that**:
the first detection mode corresponds to a scene type, which is known to have a higher frequency of use compared to the scene types corresponding to the second and third detection modes, that has the fastest detection processing speed of the detection modes for detecting the at least one target photographic subject,
the second detection mode corresponds to a scene type, which is known to have a lower frequency of use compared to the scene types corresponding to the first and third detection modes, that has the slowest detection processing speed of the detection modes for detecting the at least one target photographic subject, and
the third detection mode corresponds to a scene type, which is known to have a lower frequency of use than the first detection mode but higher than the second detection mode, that has a detection processing speed for detecting the at least one target photographic subject slower than that of the first detection mode, but faster than that of the second detection mode;
and the controller (104) controls the detector (104-1) to perform successively each of the first detection mode to the third detection mode in order of the first detection mode, the third detection mode and the second detection mode.

2. An imaging apparatus according to Claim 1, wherein the detection mode includes at least two processing patterns in which the detection processing speed is different and which are classified corresponding to a direction of the at least one target photographic subject.

3. An imaging apparatus according to Claim 1 or 2, wherein the detection mode includes at least two processing patterns in which the detection processing speed is different and which are classified corresponding to a size of the at least one target photographic subject.

4. An imaging apparatus according to any one of Claims 1 to 3, wherein the detection mode includes at least two processing patterns in which the detection processing speed is different and which are classified corresponding to a detection area where the at least one target photographic subject is detected.

5. An imaging apparatus according to any one of Claims 1 to 4, wherein the detection mode includes at least two processing patterns in which the detection processing speed is different and which are classified corresponding to the direction of the at least one target photographic subject, the at least two processing patterns in which the detection processing speed is different and which are classified corresponding to the size of the at least one target photographic subject and the at least two processing patterns in which the detection processing speed is different and which are classified corresponding to the detection area where the at least one target photographic subject is detected,
and wherein the first detection mode includes processing patterns in which each of the detection processing speed is fast and which are classified corresponding to the direction of the at least one target photographic subject, corresponding to the size of the at least one target photographic subject in an image area and corresponding to the detection area where the at least one target photographic subject is detected,
and wherein the second detection mode includes processing patterns in which each of the detection processing speed is slow and which are classified corresponding to the direction of the at least one target photographic subject, corresponding to the size of the at least one target photographic subject in an image area and corresponding to the detection area where the at least one target photographic subject is detected.

6. An imaging apparatus according to Claim 5, wherein the at least two processing patterns in which the detection processing speed is different and which are classified corresponding to the direction of the at least one target photographic subject, include a fast processing pattern in which a detection process is performed in a horizontal direction relative to a photographic subject as an object, and a slow processing pattern in which the detection process is performed in horizontal and vertical directions relative to the photographic subject as the object.

7. An imaging apparatus according to Claim 5 or 6, wherein the at least two processing patterns in which the detection processing speed is different and which are classified corresponding to the size of the at least one target photographic subject, include a fast processing pattern in which a detection process is performed on a large photographic subject in an image area as an object, and a slow processing pattern in which the detection process is performed on large and small photographic subjects in the image area as the objects.

8. An imaging apparatus according to any one of Claims 5 to 7, wherein the at least two processing patterns in which the detection processing speed is different and which are classified corresponding to the detection area where the at least one target photographic subject is detected, include a fast processing pattern in which a detection process is performed on a small detection area of a central part in regard to an entire image area as an object, and a slow processing pattern in which the detection process is performed on a larger detection area than the small detection area as the object.

9. An imaging apparatus according to any one of Claim 1 to Claim 5, wherein the controller (104) repeatedly performs the detection mode when the at least one target photographic subject is detected by performing the detection mode.

10. An imaging apparatus according to any one of Claim 1 to Claim 9, wherein the at least one target photographic subject includes a face of a person.

11. A photographic subject detection method, comprising performing detection processes using first, second and third detection modes;
**characterised in that** the method comprises:
performing a first detection process of detecting at least one target subject to be photographed by setting the first detection mode which corresponds to a scene type, which is known to have a higher frequency use compared to scene types corresponding to the second and third detection modes, that has the fastest detection process speed of the detection modes for detecting the at least the one target photographic subject;
performing a second detection process of detecting the at least one target photographic subject by setting the second detection mode having a detection processing speed for detecting the at least one target photographic subject that is slower than that of the first detection mode but faster than that of the third detection mode, when the at least one target photographic subject is not detected by the first detection mode; and
performing a third detection process of detecting the at least one target photographic subject by setting the third detection mode corresponding to a scene type, which is known to have a lower frequency of use compared to scene types corresponding to the first and second detection modes, that has the slowest detection processing speed of the detection modes for detecting the at least one target photographic subject, when the at least one target photographic subject is not detected by the second detection mode.

12. A photographic subject detection method according to Claim 11, further comprising:
repeating the same detection process of the first detection process to the third detection process when the at least one target photographic subject is detected by that one of the first detection process to the third detection process.

13. A photographic subject detection method according to Claim 11 or 12, wherein the at least one target photographic subject includes a face of a person.

14. A photographic subject detection method according to any one of Claims 11 to 13 wherein the at least one of the first to the third detection modes includes at least two processing patterns in which the detection processing speed is different and which are classified corresponding to a direction of the at least one target photographic subject.

15. A photographic subject detection method according to any one of Claims 11 to 14, wherein the at least one of the first to the third detection modes includes at least two processing patterns in which the detection processing speed is different and which are classified corresponding to a size of the at least one target photographic subject.

16. A photographic subject detection method according to any one of Claims 11 to 15, wherein the at least one of the first to the third detection modes includes at least two processing patterns in which the detection processing speed is different and which are classified corresponding to a detection area where the at least one target photographic subject is detected.

17. A photographic subject detection method according to any one of Claims 14 to 16 wherein the at least two processing patterns in which the detection processing speed is different and which are classified corresponding to the direction of the at least one target photographic subject, include a fast processing pattern in which a detection process is performed in a horizontal direction relative to a photographic subject as an object, and a slow processing pattern in which the detection process is performed in horizontal and vertical directions relative to the photographic subject as the objects.

18. A photographic subject detection method according to Claim 15 or 16, wherein the at least two processing patterns in which the detection processing speed is different and which are classified corresponding to the size of the at least one target photographic subject, include a fast processing pattern in which a detection process is performed on a large photographic subject in an image area as an object, and a slow processing pattern in which the detection process is performed on large and small photographic subjects in the image area as the objects.

19. A photographic subject detection method according to Claim 18, wherein the at least two processing patterns in which the detection processing speed is different and which are classified corresponding to the detection area where the at least one target photographic subject is detected, include a fast processing pattern in which a detection process is performed on a small detection area of a central part in regard to an entire image area as an object, and a slow processing pattern in which the detection process is performed on a larger detection area than the small detection area as the object.

## Patentansprüche

1. Bilderzeugungsvorrichtung, die umfasst:
einen Bilderzeugungsabschnitt (7, 101 und 102);
einen Detektor (104-1), um wenigstens ein zu photographierendes Zielsubjekt aus Bildern zu detektieren, die ununterbrochen durch den Bilderzeugungsabschnitt (7, 101 und 102) erzeugt werden; und
eine Steuereinheit (104), die den Detektor in eine Detektionsbetriebsart versetzt, die eine erste Detektionsbetriebsart, eine zweite Detektionsbetriebsart und eine dritte Detektionsbetriebsart umfasst,
**dadurch gekennzeichnet, dass** die erste Detektionsbetriebsart einem Szenentyp entspricht, von dem bekannt ist, dass er eine höhere Nutzfrequenz im Vergleich zu Szenentypen besitzt, die der zweiten und der dritten Detektionsbetriebsart entsprechen, und die schnellste Detektionsverarbeitungsgeschwindigkeit der Detetkionsbetriebsarten besitzt, um das wenigstens eine photographische Zielsubjekt zu detektieren,
wobei die zweite Detektionsbetriebsart einem Szenentyp entspricht, von dem bekannt ist, dass er eine niedrigere Nutzfrequenzim Vergleich zu den Szenentypen besitzt, die der ersten und der dritten Detektionsbetriebsart entsprechen, und die geringste Detektionsverarbeitungsgeschwindigkeit der Detetkionsbetriebsarten besitzt, um das wenigstens eine photographische Zielsubjekt zu detektieren, und
die dritte Detektionsbetriebsart einem Szenentyp entspricht, von dem bekannt ist, dass er eine niedrigere Nutzfrequenz als die erste Detektionsbetriebsart, jedoch eine höhere Nutzfrequenz als die zweite Detektionsbetriebsart besitzt,deren Detektionsverarbeitungsgeschwindigkeit, um das wenigstens eine photographische Zielsubjekt zu detektieren, niedriger als jene der ersten Detektionsbetriebsart, jedoch höher als jene der zweiten Detektionsbetriebsartist;
und die Steuereinheit (104) den Detektor (104-1) steuert, um nacheinander jede der ersten bis dritten Detektionsbetriebsarten in der Reihenfolge von der ersten Detektionsbetriebsart zu der dritten Detektionsbetriebsart und zu der zweiten Detektionsbetriebsart auszuführen.

2. Bilderzeugungsvorrichtung nach Anspruch 1, wobei die Detektionsbetriebsart wenigstens zwei Verarbeitungsmuster enthält, in denen die Detektionsverarbeitungsgeschwindigkeit unterschiedlich ist und die entsprechend einer Richtung des wenigstens einen photographischen Zielsubjekts klassifiziert werden.

3. Bilderzeugungsvorrichtung nach Anspruch 1 oder 2, wobei die Detektionsbetriebsart wenigstens zwei Verarbeitungsmuster enthält, in denen die Detektionsverarbeitungsgeschwindigkeit unterschiedlich ist und die entsprechend einer Größe des wenigstens einen photographischen Zielsubjekts klassifiziert werden.

4. Bilderzeugungsvorrichtung nach einem der Ansprüche 1 bis 3, wobei die Detektionsbetriebsart wenigstens zwei Verarbeitungsmuster enthält, in denen die Detektionsverarbeitungsgeschwindigkeit unterschiedlich ist und die entsprechend einem Detektionsbereich, in dem das wenigstens eine photographische Zielsubjekt detektiert wird, klassifiziert werden.

5. Bilderzeugungsvorrichtung nach einem der Ansprüche 1 bis 4, wobei die Detektionsbetriebsart umfasst: wenigstens zwei Verarbeitungsmuster, in denen die Detektionsverarbeitungsgeschwindigkeit unterschiedlich ist und die entsprechend der Richtung des wenigstens einen photographischen Zielsubjekts klassifiziert werden, die wenigstens zwei Verarbeitungsmuster, in denen die Detektionsverarbeitungsgeschwindigkeit unterschiedlich ist und die entsprechend der Größe des wenigstens einen photographischen Zielsubjekts klassifiziert werden, und die wenigstens zwei Verarbeitungsmuster, in denen die Detektionsverarbeitungsgeschwindigkeit unterschiedlich ist und die entsprechend dem Detektionsbereich, in dem das wenigstens eine photographische Zielsubjekt detektiert wird, klassifiziert werden,
wobei die erste Detektionsbetriebsart Verarbeitungsmuster enthält, in denen die Detektionsverarbeitungsgeschwindigkeit hoch ist und die entsprechend der Richtung des wenigstens einen photographischen Zielsubjekts, entsprechend der Größe des wenigstens einen photographischen Zielsubjekts in einem Bildbereich und entsprechend dem Detektionsbereich, in dem das wenigstens eine photographische Zielsubjekt detektiert wird, klassifiziert werden,
und wobei die zweite Detektionsbetriebsart Verarbeitungsmuster enthält, in denen jede Detektionsverarbeitungsgeschwindigkeit niedrig ist und die entsprechend der Richtung des wenigstens einen photographischen Zielsubjekts, entsprechend der Größe des wenigstens einen photographischen Zielsubjekts in einem Bildbereich und entsprechend dem Detektionsbereich, in dem das wenigstens eine photographische Zielsubjekt detektiert wird, klassifiziert werden.

6. Bilderzeugungsvorrichtung nach Anspruch 5, wobei die wenigstens zwei Verarbeitungsmuster, in denen die Detektionsverarbeitungsgeschwindigkeit unterschiedlich ist und die entsprechend der Richtung des wenigstens einen photographischen Zielsubjekts klassifiziert werden, ein schnelles Verarbeitungsmuster, in der ein Detektionsprozess in einer horizontalen Richtung relativ zu einem photographischen Subjekt als ein Objekt ausgeführt wird, und ein langsames Verarbeitungsmuster, in dem der Detektionsprozess in einer horizontalen und in einer vertikalen Richtung relativ zu dem photographischen Subjekt als das Objekt ausgeführt wird, umfassen.

7. Bilderzeugungsvorrichtung nach Anspruch 5 oder 6, wobei die wenigstens zwei Verarbeitungsmuster, in denen die Detektionsverarbeitungsgeschwindigkeit unterschiedlich ist und die entsprechend der Größe des wenigstens einen photographischen Zielsubjekts klassifiziert werden, ein schnelles Verarbeitungsmuster, in dem ein Detektionsprozess an einem großen photographischen Subjekt in einem Bildbereich als ein Objekt ausgeführt wird, und ein langsames Verarbeitungsmuster, in dem der Detektionsprozess an großen und kleinen photographischen Subjekten in dem Bildbereich als die Objekte ausgeführt wird, umfassen.

8. Bilderzeugungsvorrichtung nach einem der Ansprüche 5 bis 7, wobei die wenigstens zwei Verarbeitungsmuster, in denen die Detektionsverarbeitungsgeschwindigkeit unterschiedlich ist und die entsprechend dem Detektionsbereich, in der das wenigstens eine photographische Zielobjekt detektiert wird, klassifiziert werden, ein schnelles Verarbeitungsmuster, in dem ein Detektionsprozess an einem kleinen Detektionsbereich eines mittleren Teils in Bezug auf einem gesamten Bildbereich als ein Objekt ausgeführt wird, und ein langsames Verarbeitungsmuster, in dem der Detektionsprozess an einem größeren Detektionsbereich als dem kleinen Detektionsbereich als das Objekt ausgeführt wird, enthalten.

9. Bilderzeugungsvorrichtung nach einem der Ansprüche 1 bis 5, wobei die Steuereinheit (104) die Detektionsbetriebsart wiederholt ausführt, wenn das wenigstens eine photographische Zielobjekt durch Ausführen der Detektionsbetriebsart detektiert wird.

10. Bilderzeugungsvorrichtung nach einem der Ansprüche 1 bis 9, wobei das wenigstens eine photographische Zielobjekt ein Gesicht einer Person enthält.

11. Verfahren zum Detektieren eines photographischen Subjekts, das das Ausführen von Detektionsprozessen unter Verwendung einer ersten, einer zweiten und einer dritten Detektionsbetriebsart umfasst,
**dadurch gekennzeichnet, dass** das Verfahren umfasst:
Ausführen eines ersten Detektionsprozesses zum Detektieren wenigstens eines zu photographierenden Zielsubjekts durch Einstellen der ersten Detektionsbetriebsart, die einem Szenentyp entspricht, von dem bekannt ist, dass er eine höhere Nutzfrequenz im Vergleich zu Szenentypen besitzt, die der zweiten und der dritten Detektionsbetriebsart entsprechen, der die schnellste Detektionsverarbeitungsgeschwindigkeit der Detektionsbetriebsarten zum Detektieren des wenigstens einen photographischen Zielsubjekts besitzt;
Ausführen eines zweiten Detektionsprozesses zum Detektieren des wenigstens einen photographischen Zielsubjekts durch Einstellen der zweiten Detektionsbetriebsart, die eine Detektionsverarbeitungsgeschwindigkeit zum Detektieren des wenigstens einen photographischen Zielsubjekts besitzt, die niedriger ist als jene der ersten Detektionsbetriebsart, jedoch schneller ist als jene der dritten Detektionsbetriebsart, wenn das wenigstens eine photographische Zielobjekt durch die erste Detektionsbetriebsart nicht detektiert wird; und
Ausführen eines dritten Detektionsprozesses zum Detektieren des wenigstens einen photographischen Zielsubjekts durch Einstellen der dritten Detektionsbetriebsart, die einem Szenentyp entspricht, von dem bekannt ist, dass er eine niedrigere Nutzfrequenz im Vergleich zu Szenentypen besitzt, die der ersten und der zweiten Detektionsbetriebsart entsprechen, der die langsamste Detektionsverarbeitungsgeschwindigkeit der Detektionsbetriebsarten zum Detektieren des wenigstens einen photographischen Zielobjekts besitzt, wenn das wenigstens eine photographische Zielsubjekt durch die zweite Detektionsbetriebsart nicht detektiert wird.

12. Verfahren zum Detektieren eines photographischen Subjekts nach Anspruch 11, das ferner umfasst:
Wiederholen desselben Detektionsprozesses des ersten bis dritten Detektionsprozesses, wenn das wenigstens eine photographische Zielsubjekt durch diesen des ersten bis dritten Detektionsprozess detektiert wird.

13. Verfahren zum Detektieren eines photographischen Subjekts nach Anspruch 11 oder 12, wobei das wenigstens eine photographische Zielsubjekt ein Gesicht einer Peson enthält.

14. Verfahren zum Detektieren eines photographischen Subjekts nach einem der Ansprüche 11 bis 13, wobei die wenigstens eine der ersten bis dritten Detektionsbetriebsarten wenigstens zwei Verarbeitungsmuster enthält, in denen die Detektionsverarbeitungsgeschwindigkeit unterschiedlich ist und die entsprechend einer Richtung des wenigstens einen photographischen Zielsubjekts klassifiziert werden.

15. Verfahren zum Detektieren eines photographischen Subjekts nach einem der Ansprüche 11 bis 14, wobei die wenigstens eine der ersten bis dritten Detektionsbetriebsarten wenigstens zwei Verarbeitungsmuster enthält, in denen die Detektionsverarbeitungsgeschwindigkeit unterschiedlich ist und die entsprechend einer Größe des wenigstens einen photographischen Zielsubjekts klassifiziert werden.

16. Verfahren zum Detektieren eines photographischen Subjekts nach einem der Ansprüche 11 bis 15, wobei die wenigstens eine der ersten bis dritten Detektionsbetriebsarten wenigstens zwei Verarbeitungsmuster enthalten, in denen die Detektionsverarbeitungsgeschwindigkeit unterschiedlich ist und die entsprechend einer Detektionsfläche klassifiziert werden, in der das wenigstens eine photographische Zielobjekt detektiert wird.

17. Verfahren zum Detektieren eines photographischen Subjekts nach einem der Ansprüche 14 bis 16, wobei die wenigstens zwei Verarbeitungsmuster, in denen die Detektionsverarbeitungsgeschwindigkeit unterschiedlich ist und die entsprechend der Richtung des wenigstens einen photographischen Zielsubjekts klassifiziert werden, ein schnelles Verarbeitungsmuster, in dem ein Detektionsprozess in einer horizontalen Richtung in Bezug auf ein photographisches Subjekt als ein Objekt ausgeführt wird, und ein langsames Verarbeitungsmuster, in dem der Detektionsprozess in einer horizontalen und einer vertikalen Richtung in Bezug auf das photographische Subjekt als die Objekte ausgeführt wird, umfassen.

18. Verfahren zum Detektieren eines photographischen Subjekts nach Anspruch 15 oder 16, wobei die wenigstens zwei Verarbeitungsmuster, in denen die Detektionsverarbeitungsgeschwindigkeit unterschiedlich ist und die entsprechend der Größe des wenigstens einen photographischen Zielsubjekts klassifiziert werden, ein schnelles Verarbeitungsmuster, in dem ein Detektionsprozess an einem großen photographischen Subjekt in einem Bildbereich als ein Objekt ausgeführt wird, und ein langsames Verarbeitungsmuster, in dem der Detektionsprozess an einem großen und einem kleinen photographischen Subjekt im Bildbereich als die Objekte ausgeführt wird, umfassen.

19. Verfahren zum Detektieren eines photographischen Subjekts nach Anspruch 18, wobei die wenigstens zwei Verarbeitungsmuster, in denen die Detektionsverarbeitungsgeschwindigkeit unterschiedlich ist und die entsprechend dem Detektionsbereich, in dem das wenigstens eine photographische Zielsubjekt detektiert wird, klassifiziert werden, ein schnelles Verarbeitungsmuster, in dem ein Detektionsprozess in einem kleinen Detektionsbereich eines mittleren Teils in Bezug auf einen gesamten Bildbereich als ein Objekt ausgeführt wird, und ein langsames Verarbeitungsmuster, in dem der Detektionsprozess in einem größeren Detektionsbereich als in dem kleinen Detektionsbereich als das Objekt ausgeführt wird, umfassen.

## Revendications

1. Appareil d'imagerie, qui comprend :
une section d'imagerie (7, 101 et 102) ;
un détecteur (104-1) qui détecte au moins une cible à photographier à partir d'images prises en continu par la section d'imagerie (7, 101 et 102) ; et
un contrôleur (104) qui place le détecteur dans un mode de détection qui comprend un premier mode de détection, un second mode de détection, et un troisième mode de détection,
**caractérisé en ce que** :
le premier mode de détection correspond à un type de scène qui est connu comme ayant une fréquence d'utilisation supérieure aux types de scènes qui correspondent au second et au troisième modes de détection, et qui possède la vitesse de détection la plus rapide des modes de détection dudit sujet photographique cible,
le second mode de détection correspond à un type de scène qui est connu comme ayant une fréquence d'utilisation inférieure aux types de scènes qui correspondent au premier et au troisième modes de détection, et qui possède la vitesse de traitement la plus faible des modes de détection dudit sujet photographique cible, et
le troisième mode de détection correspond à un type de scène qui est connu comme ayant une fréquence d'utilisation inférieure au premier mode de détection mais supérieur au second mode de détection, et qui possède une vitesse de détection dudit sujet photographique cible inférieure à celle du premier mode de détection, mais supérieure à celle du second mode de détection ;
et le contrôleur (104) contrôle le détecteur (104-1) afin d'exécuter successivement chacun du premier au troisième modes de détection dans l'ordre suivant : premier mode de détection, troisième mode de détection et second mode de détection.

2. Appareil d'imagerie selon la revendication 1, dans lequel le mode de détection comprend au moins deux modèles de traitement selon lesquels la vitesse de détection est différente et qui sont classés en fonction de la direction du sujet photographique cible.

3. Appareil d'imagerie selon la revendication 1 ou 2, dans lequel le mode de détection comprend au moins deux modèles de traitement selon lesquels la vitesse de détection est différente, et qui sont classés en fonction de la taille du sujet photographique cible.

4. Appareil d'imagerie selon l'une quelconque des revendications 1 à 3, dans lequel le mode de détection comprend au moins deux modèles de traitement selon lesquels la Vitesse de détection est différente, et qui sont classés en fonction de la zone de détection dans laquelle le sujet photographique cible est détecté.

5. Appareil d'imagerie selon l'une quelconque des revendications 1 à 4, dans lequel le mode de détection comprend au moins deux modèles de détection selon lesquels la vitesse de détection est différente, et qui sont classés en fonction de la direction du sujet photographique cible : lesdits deux modèles de traitement selon lesquels la vitesse de détection est différente et qui sont classés en fonction de la taille du sujet photographique cible, et lesdits deux modèles de traitement selon lesquels la vitesse de détection est différente et qui sont classés en fonction de la zone de détection dans laquelle est détecté le sujet photographique cible,
et dans lequel le premier mode de détection comprend des modèles de traitement selon lesquels chacune de la vitesse de détection est rapide et qui sont classés en fonction de la direction dudit sujet photographique cible, de la taille du sujet photographique cible dans une zone d'image, et de la zone de détection dans laquelle est détecté le sujet photographique cible,
et dans lequel le second mode de détection comprend des modèles de traitement selon lesquels chacune de la vitesse de détection est lente et qui sont classés en fonction de la direction su sujet photographique cible, de la taille du sujet photographique cible dans une zone d'image, et de la zone de détection dans laquelle est détecté le sujet photographique cible.

6. Appareil d'imagerie selon la revendication 5, dans lequel lesdits deux modèles de traitement selon lesquels la vitesse de détection est différente et qui sont classés en fonction de la direction du sujet photographique cible comprennent un modèle de traitement rapide selon lequel un processus de détection est exécuté dans une direction horizontale par rapport à un sujet photographique qui fait office d'objet, et un modèle de traitement lent selon lequel le processus de détection est exécuté dans des directions horizontale et verticale par rapport au sujet photographique.

7. Appareil d'imagerie selon la revendication 5 ou 6, dans lequel lesdits deux modèles de traitement selon lesquels la vitesse de détection est différente qui sont classés en fonction de la taille du sujet photographique cible comprennent un modèle de traitement rapide selon lequel un processus de détection est exécuté sur un sujet photographique de grande taille dans une zone d'image en tant qu'objet, et un modèle de traitement lent selon lequel le processus de détection est exécuté sur des sujets photographiques de grande et de petite taille dans la zone d'image en tant qu'objets.

8. Appareil d'imagerie selon l'une quelconque des revendications 5 à 7, dans lequel lesdits deux modèles de traitement selon lesquels la vitesse de détection est différente et qui sont classés en fonction de la zone de détection dans laquelle est détecté le sujet photographique cible comprennent un modèle de détection rapide selon lequel un processus de détection est exécuté sur une zone de détection de petite taille d'une partie centrale par rapport à une zone d'image entière en tant qu'objet, et un modèle de détection lent selon lequel le processus de détection est exécuté sur une zone de détection plus grande que la zone de détection de petite taille en tant qu'objet.

9. Appareil d'imagerie selon l'une quelconque des revendications 1 à 5, dans lequel le contrôleur (104) exécute le mode de détection de manière répétée lorsque ledit sujet photographique cible est détecté en exécutant le mode de détection.

10. Appareil d'imagerie selon l'une quelconque des revendications 1 à 9, dans lequel le sujet photographique cible comprend le visage d'une personne.

11. Procédé de détection de sujet photographique, qui comprend l'exécution de processus de détection qui utilisent un premier, un second et un troisième modes de détection ;
**caractérisé en ce que** le procédé comprend :
l'exécution d'un premier processus de détection d'au moins un sujet cible à photographier en définissant le premier mode de détection qui correspond à un type de scène, qui est connu comme ayant une fréquence d'utilisation supérieure aux types de scènes qui correspondent au second et au troisième modes de détection et qui possède la vitesse de détection la plus rapide des modes de détection du sujet photographique cible ;
l'exécution d'un second processus de détection du sujet photographique cible en définissant le second mode de détection qui possède une vitesse de détection du sujet photographique cible inférieure à celle du premier mode de détection, mais supérieure à celle du troisième mode de détection, lorsque le sujet photographique cible n'est pas détecté par le premier mode de détection ; et
l'exécution d'un troisième mode de détection du sujet photographique cible en définissant le troisième mode de détection qui correspond à un type de scène qui est connu comme ayant une fréquence d'utilisation inférieure aux types de scènes qui correspondent au premier et au second modes de détection, et qui possède la vitesse de détection la plus faible des modes de détection du sujet photographique cible, lorsque le sujet photographique cible n'est pas détecté par le second mode de détection.

12. Procédé de détection de sujet photographique selon la revendication 11, qui comprend en outre :
la répétition des mêmes premier au troisième processus de détection lorsque le sujet photographique cible est détecté par l'un du premier au troisième modes de détection.

13. Procédé de détection de sujet photographique selon la revendication 11 ou 12, dans lequel le sujet photographique cible comprend le visage d'une personne.

14. Procédé de détection de sujet photographique selon l'une des revendications 11 à 13, dans lequel ledit des premier au troisième modes de détection comprend au moins deux modèles de traitement selon lesquels la vitesse de détection est différente et qui sont classés en fonction de la direction dudit sujet photographique cible.

15. Procédé de détection de sujet photographique selon l'une quelconque des revendications 11 à 14, dans lequel ledit du premier au troisième modes de détection comprend au moins deux modèles de traitement selon lesquels la vitesse de détection est différente et qui sont classés en fonction de la taille dudit sujet photographique cible.

16. Procédé de détection de sujet photographique selon l'une quelconque des revendications 11 à 15, dans lequel ledit du premier au troisième modes de détection comprend au moins deux modèles de traitement selon lesquels la vitesse de détection est différente et qui sont classés en fonction d'une zone de détection dans laquelle le sujet photographique cible est détecté.

17. Procédé de détection de sujet photographique selon l'une quelconque des revendications 14 à 16, dans lequel lesdits deux modèles de traitement selon lesquels la vitesse de détection est différente et qui sont classés en fonction de la direction dudit sujet photographique cible comprennent un modèle de traitement rapide selon lequel un processus de détection est exécuté dans une direction horizontale par rapport à un sujet photographique qui sert d'objet, et un modèle de traitement lent selon lequel le processus de détection est exécuté dans des directions horizontale et verticale par rapport au sujet photographique en tant qu'objet.

18. Procédé de détection de sujet photographique selon la revendication 15 ou 16, dans lequel lesdits deux modèles de traitement selon lesquels la vitesse de détection est différente et qui sont classés en fonction de la taille dudit sujet photographique cible comprennent un modèle de traitement rapide selon lequel un processus de détection est exécuté sur un sujet photographique de grande taille dans une zone d'image en tant qu'objet, et un modèle de traitement lent selon lequel le processus de détection est exécuté sur des sujets photographiques de grande et de petite taille dans la zone d'image, en tant qu'objets.

19. Procédé de détection de sujet photographique selon la revendication 18, dans lequel lesdits deux modèles de traitement selon lesquels la vitesse de détection est différente et qui sont classés en fonction de la zone de détection dans laquelle ledit sujet photographique cible est détecté comprennent un modèle de traitement rapide selon lequel un processus de détection est exécuté sur une zone de détection de petite taille par rapport à une zone d'image en tant qu'objet, et un modèle de traitement lent selon lequel le processus de détection est exécuté sur une zone de détection plus grande que la zone de détection de petite taille en tant qu'objet.
